# EUROPEAN PATENT APPLICATION

(11) **EP 1 197 873 A1**
(43) Date of publication of application: **17.04.2002**
(21) Application number: 99973777.8
(22) Date of filing: 16.03.1999
(51) Int. Cl.: G06F 15/00, G06F 12/14

(54) **INFORMATION PROCESSOR, METHOD OF CONTROLLING INFORMATION PROCESSOR, AND RECORDING MEDIUM**

(71) Applicant: FUJITSU LIMITED, Kawasaki-shi, Kanagawa 211-8588 (JP)
(72) Inventor: SUGIMURA, Seiji, Fujitsu Limited, Kawasaki-shi, Kanagawa 211-8588 (JP)
(74) Representative: Stebbing, Timothy Charles
(86) International application number: JP9901269
(87) International publication number: WO0055745

(57) **Abstract**

An information processing apparatus is constructed to include a storage unit, and a processing part which registers information of the information processing apparatus by transmitting to a first database of a registration center when a password input error is detected and stores transmission log information related to a transmission to the registration center into said storage unit.

## Description

### TECHNICAL FIELD

The present invention generally relates to information processing apparatuses, information processing apparatus control methods and storage media, and more particularly to an information processing apparatus and an information processing apparatus control method which process an input error and an unauthorized access by distinguishing the two, and to a computer-readable storage medium which stores a program for causing a computer to carry out such a process.

Recently, the size of information processing apparatuses such as personal computers have been reduced and the use of portable information processing apparatuses have become popular. To cope with such a trend, various techniques have been proposed to prevent unauthorized use of the information processing apparatus by a person other than.the legitimate user.

### BACKGROUND ART

Conventionally, a method has been proposed to put the information processing apparatus into a system-down state when a password input error with respect to the information processing apparatus occurs a predetermined number of times. In addition, a method has been proposed to display an analysis code when putting the information processing apparatus into the system-down state, by taking into consideration a case where the legitimate user forgets the password. In this case, the legitimate user can notify information for confirming the legitimate user's identity and the analysis code to an information center which is connected to the information processing apparatus, and inquire the 'information center of the legitimate user's password.

For example, a Japanese Laid-Open Patent Application No.8-314805 proposes a method which automatically notifies information indicating unauthorized use of the information processing apparatus to the information center, when the password input error with respect to the information processing apparatus occurs a predetermined number of times. According to this proposed method, the information processing apparatus not only makes the above described notification to the information center, but also dumps data within the information processing apparatus by enciphering the data and sending the enciphered data to the information center. After the enciphered data are stored in the form of a backup copy in the information center, the data within the information processing apparatus are all erased.

Furthermore, as a system which prevents the portable information processing apparatus from being stolen, there is a proposed system which generates an alarm when the password input error with respect to the portable information processing apparatus occurs a predetermined number of times, until no more battery capacity remains within the portable information processing apparatus.

However, in the case of the method which displays the analysis code when the password input error with respect to the information processing apparatus occurs the predetermined number of times, the analysis code is generated based on the password. For this reason, there is a possibility that a person other than the legitimate user may decode the password from the analysis code.

On the other hand, in the case of the method which automatically notifies the information indicating the unauthorized use of the information processing apparatus from the information processing apparatus to the information center when the password input error occurs the predetermined number of times, security is activated even when the legitimate user forgets the password. For this reason, even if the stolen information processing apparatus is returned to the legitimate user, the data within the returned information processing apparatus are all erased.

Furthermore, in the case of the system which generates the alarm when the password input error occurs the predetermined number of times until no more battery capacity remains within the information processing apparatus, the alarm is stopped when the battery is removed from the information processing apparatus. Consequently, as a theft-preventing system for preventing the information processing apparatus from being stolen, this system does not have a high reliability.

### DISCLOSURE OF THE INVENTION

Accordingly, it is a general object of the present invention to provide a novel and useful information processing apparatus, information processing apparatus control method and storage medium, in which the problems described above are eliminated.

Another and more specific object of the present invention is to provide an information processing apparatus and an information processing apparatus control method which process an input error and an unauthorized access by distinguishing the two so that a highly reliable theft-preventing system can be realized, and to a computer-readable storage medium which stores a program for causing a computer to carry out such a process.

Still another object of the present invention is to provide an information processing apparatus comprising a storage unit; and a processing part which registers information of the information processing apparatus by transmitting to a first database of a registration center when a password input error is detected, and stores transmission log information related to a transmission to the registration center into said storage unit. According to the information processing apparatus of the present invention, it is possible to easily and positively prevent unauthorized use of the information processing apparatus when the information processing apparatus is stolen, and process an input error and an unauthorized access by distinguishing the two. In addition, since the data within the information processing apparatus remain stored, it is unnecessary to restore the data when the stolen information processing apparatus is returned to the legitimate user.

The processing part may include means for transmitting to a second database of the registration center if the transmission log information is stored in said storage unit, and for making a system lock with respect to the information processing apparatus if the information related to the information processing apparatus is registered in the first database or the second database.

The processing part may include means for outputting a warning if the information related to the information processing apparatus is registered in the second database.

A further object of the present invention is to provide an information processing apparatus comprising a processing part which searches a first database of a registration center and registers information related to a predetermined apparatus into a second database of the registration center if the information related to the predetermined apparatus is registered in the first database. According to the information processing apparatus of the present invention, it is possible to easily and positively prevent unauthorized use of the information processing apparatus when the information processing apparatus is stolen, and process an input error and an unauthorized access by distinguishing the two. In addition, since the data within the information processing apparatus remain stored, it is unnecessary to restore the data when the stolen information processing apparatus is returned to the legitimate user.

The processing part may include means for deleting the information related to the predetermined apparatus registered in the first database and/or the second database.

Another object of the present invention is to provide an information processing apparatus comprising a first database which registers information related to a first apparatus when notified of a password input error at the first apparatus, in response to a transmission from the first apparatus; a second database which registers the information of the first apparatus when the information related to the first apparatus is notified from a second apparatus and the information related to the first apparatus is registered in said first database, in response to a transmission from the second apparatus; and a processing.part which controls registration of information to and deletion of information from said first database and said second database. According to the information processing apparatus of the present invention, it is possible to easily and positively prevent unauthorized use of the first apparatus when the first apparatus is stolen, and process an input error and an unauthorized access by distinguishing the two. In addition, since the data within the first apparatus remain stored, it is unnecessary to restore the data when the stolen first apparatus is returned to the legitimate user.

The processing part may include means for deleting the information related to the first apparatus from said first database and/or said second database when a request to delete the information related to the first apparatus is received with respect to said first database and/or said second database, in response to the transmission from the second apparatus.

Still another object of the present invention is to provide an information processing apparatus control method comprising a step which registers information of an information processing apparatus by transmitting to a first database of a registration center when a password input error is detected at the information processing apparatus, and stores transmission log information related to a transmission to the registration center within the information processing apparatus. According to the information processing apparatus control method of the present invention, it is possible to easily and positively prevent unauthorized use of the information processing apparatus when the information processing apparatus is stolen, and process an input error and an unauthorized access by distinguishing the two. In addition, since the data within the information processing apparatus remain stored, it is unnecessary to restore the data when the stolen information processing apparatus is returned to the legitimate user.

The information processing apparatus control method may further comprise a step which transmits to a second database of the registration center if the transmission log information is stored in the information processing apparatus, and makes a system lock with respect to the information processing apparatus if the information related to the information processing apparatus is registered in the first database or the second database.

The information processing apparatus control method may further comprise a step which outputs a warning if the information related to the information processing apparatus is registered in the second database.

A further object of the present invention is to provide an information processing apparatus control method comprising a step which searches a first'database of a registration center and registers information related to a predetermined apparatus into a second database of the registration center if the information related to the predetermined apparatus is registered in the first database.

The information processing apparatus control method may further comprise a step which deletes the information related to the predetermined apparatus registered in the first database and/or the second database.

Another object of the present invention is to provide an information processing apparatus control method comprising a step which registers information related to a first apparatus in a first database when notified of a password input error at the first apparatus, in response to a transmission from the first apparatus; a step which registers the information of the first apparatus in a second database when the information related to the first apparatus is notified from a second apparatus and the information related to the first apparatus is registered in said first database, in response to a transmission from the second apparatus; and a step which controls registration of information to and deletion of information from said first database and said second database. According to the information processing apparatus control method of the present invention, it is possible to easily and positively prevent unauthorized use of the first apparatus when the first apparatus is stolen, and process an input error and an unauthorized access by distinguishing the two. In addition, since the data within the first apparatus remain stored, it is unnecessary to restore the data when the stolen first apparatus is returned to the legitimate user.

The information processing apparatus control method may further comprise a step which deletes the information related to the first apparatus from said first database and/or said second database when a request to delete the information related to the first apparatus is received with respect to said first database and/or said second database, in response to the transmission from the second apparatus.

The information processing apparatus control method may be applied to a control program or an operating system of the information processing apparatus..

Still another object of the present invention is to provide a computer-readable storage medium which stores a program for causing a computer to control access to a registration center, comprising means for causing the computer to register information of the computer by transmitting to a first database of the registration center when a password input error is detected, and for causing the computer to store transmission log information related to a transmission to the registration center. According to the computer-readable storage medium of the present invention, it is possible to easily and positively prevent unauthorized use of the information processing apparatus when the information processing apparatus is stolen, and process an input error and an unauthorized access by distinguishing the two. In addition, since the data within the information processing apparatus remain stored, it is unnecessary to restore the data when the stolen information processing apparatus is returned to the legitimate user.

The computer-readable storage medium may further comprise means for causing the computer to transmit to a second database of the registration center if the transmission log information is stored in said storage unit, and for causing the computer to make a system lock with respect to the computer if the information related to the computer is registered in the first database or the second database.

The computer-readable storage medium may further comprise means for causing the computer to output a warning if the information related to the computer is registered in the second database.

A further object of the present invention is to provide a computer-readable storage medium which stores a program for causing a computer to control access to a registration center, comprising means for causing the computer to search a first database of a registration center and register information related to a predetermined apparatus into a second database of the registration center if the information related to the predetermined apparatus is registered in the first database. According to the information processing apparatus of the present invention, it is possible to easily and positively prevent unauthorized use of the predetermined apparatus when the predetermined apparatus is stolen, and process an input error and an unauthorized access by distinguishing the two. In addition, since the data within the predetermined apparatus remain stored, it is unnecessary to restore the data when the stolen predetermined apparatus is returned to the legitimate user.

The computer-readable storage medium may further comprise means for causing the computer to delete the information related to the predetermined apparatus registered in the first database and/or the second database.

Another object of the present invention is to provide a computer-readable storage medium which stores a program for causing a computer to control access to a registration center, comprising means for causing the computer to register information related to a first apparatus in a first database when notified of a password input error at the first apparatus, in response to a transmission from the first apparatus; means for causing the computer to register the information of the first apparatus in a second database when the information related to the first apparatus is notified from a second apparatus and the information related to the first apparatus is registered in said first database, in response to a transmission from the second apparatus; and means for causing the computer to control registration of information to and deletion of information from said first database and said second database. According to the information processing apparatus of the present invention, it is possible to easily and positively prevent unauthorized use of the first apparatus when the first apparatus is stolen, and process an input error and an unauthorized access by distinguishing the two. In addition, since the data within the first apparatus remain stored, it is unnecessary to restore the data when the stolen first apparatus is returned to the legitimate user.

The computer-readable storage medium may further comprise means for causing the computer to delete the information related to the first apparatus from said first database and/or said second database when a request to delete the information related to the first apparatus is received with respect to said first database and/or said second database, in response to the transmission from the second apparatus.

The program may form a portion of a control program or an operating system of the information processing apparatus.

Other objects and further features of the present invention will be apparent from the following detailed description when read in conjunction with the accompanying drawings.

### BRIEF DESCRIPTION OF THE DRAWINGS

FIG. 1 is a diagram for explaining the operating principle of an information processing apparatus control method according to the present invention for a case where an access is generated by an unauthorized user other than a legitimate user;
FIG. 2 is a diagram for explaining the operating principle of the information processing apparatus control method according to the present invention for a case where the information processing apparatus is used by the unauthorized user other than the legitimate user in a state where a theft registration of the information processing apparatus is not made;
FIG. 3 is a system block diagram showing a system structure to which an embodiment of the information processing apparatus control method according to the present invention may be applied;
FIG. 4 is a flow chart for explaining the operation of a first embodiment of the information processing apparatus according to the present invention;
FIG. 5 is a flow chart for explaining the operation of a second embodiment of the information processing apparatus according to the present invention;
FIG. 6 is a flow chart for explaining the operation of a third embodiment of the information processing apparatus according to the present invention;
FIG. 7 is a flow chart for explaining the operation of the third embodiment of the information processing apparatus according to the present invention;
FIG. 8 is a diagram for explaining a data structure of management data; and
FIG. 9 is a diagram for explaining an input screen.

### BEST MODE OF CARRYING OUT THE INVENTION

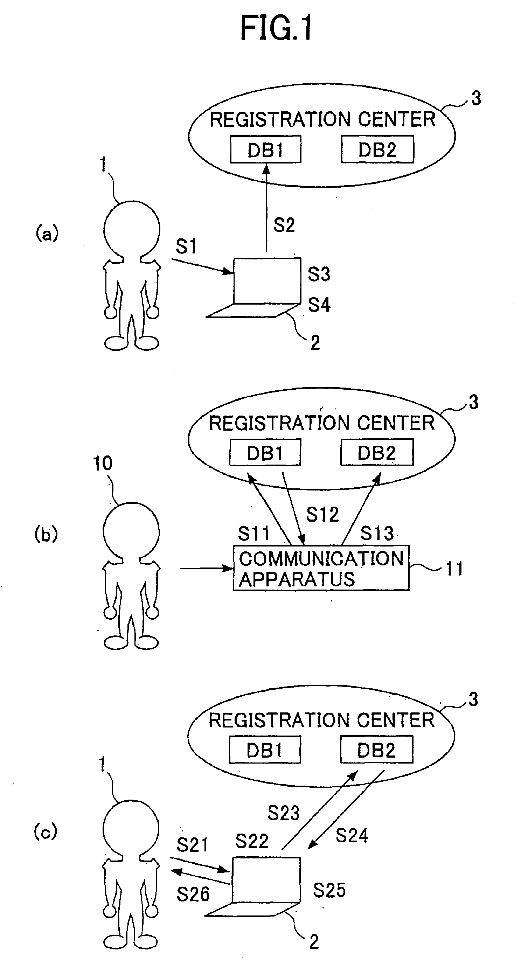

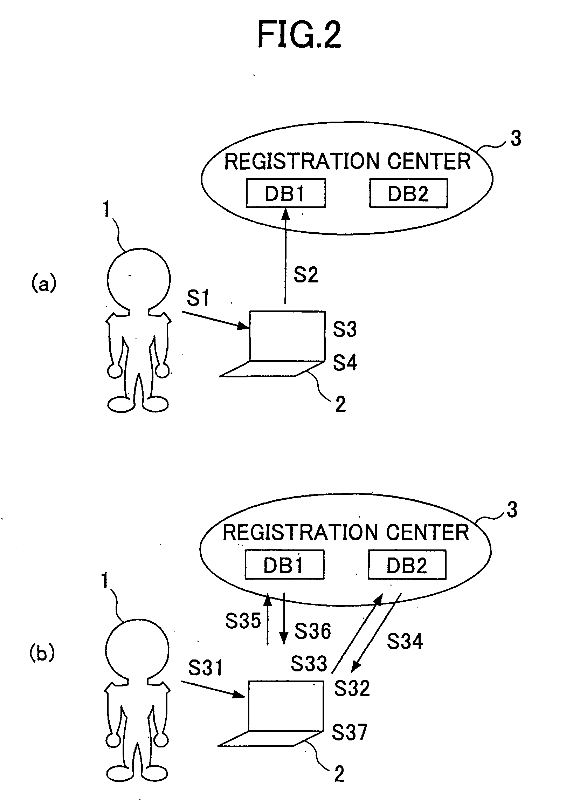

First, a description will be given of the operating principle of the present invention, by referring to FIGS. 1 and 2.

FIG. 1 is a diagram for explaining the operating principle of an information processing apparatus control method according to the present invention for a case where an access is generated by an unauthorized user other than a legitimate user.

FIG. 1(a) shows a process for a case where an unauthorized user 1 other than a legitimate user 10 uses an information processing apparatus 2. When the unauthorized user 1 makes a password input error with respect to the information processing apparatus 2 in a step S1 a predetermined number of times, for example, a step S2 makes an access to a database DB1 of a registration center 3, and thus, model information and the like related to the information processing apparatus 2 in which the password input error is generated is registered within the database DB1. In addition, a step S3 stores a transmission log information related to the transmission to the registration center 3 (in this case, transmission log information related to the transmission to the database DB1) within the information processing apparatus 2. Further, a step S4 makes a system lock with respect to the information processing apparatus 2. When the system lock is made, keys of the information processing apparatus 2 are locked to make it impossible to operate the information processing apparatus 2 and to disable communication with the registration center 3. As a result, the unauthorized user 1 can no longer use the information processing apparatus 2.

FIG. 1(b) shows a process for a case where the legitimate user 10 thereafter realizes that his information processing apparatus 2 is stolen, and makes an access from a communication apparatus 11 other than the information processing apparatus 2. When the legitimate user 10 makes an access to the registration center 3 from the communication apparatus 11 in a step S11, a data search is made to determine whether or not the model information and the like related to the information processing apparatus 2 in which the password input error is generated is registered within the database DB1 of the registration center 3. If the model information and the like related to the information processing apparatus 2 in which the password input error is generated is registered within the database DB1, a step S12 notifies to the communication apparatus 11 a message indicating that the model information and the like related to the information processing apparatus 2 is registered, that is, a message indicating that an access has been made to the registration center 3 from the information processing apparatus 2. In addition, a step S13 registers into a database DB2 the model information and the like related to the information processing apparatus 2 in which the password input error is generated and is registered within the database DB1. As a result, the legitimate user 10 registers the theft of the information processing apparatus 2 with respect to the registration center 3.

FIG. 1(c) shows a process for a case where the unauthorized user 1 again uses the information processing apparatus 2 after the theft of the information processing apparatus is registered as described above. When the unauthorized user 1 attempts to again use the information processing apparatus 2 in a step S21, a step S22 confirms whether or'not the transmission log information related to the transmission to the registration center 3 (in this case, transmission log information related to the transmission to the database DB1) is stored within the information processing apparatus 2. If the transmission log information is stored within the information processing apparatus 2, a step S23 makes an access to the database DB2 of the registration center 3, and carries out a data search to determine whether or not the theft of the information processing apparatus 2 is registered within the database DB2 of the registration center 3. If the theft of the information processing apparatus 2 is registered within the database DB2, a step S24 notifies to the information processing apparatus 2 a message indicating that the theft of the information processing apparatus 2 is registered, that is, a warning message with respect to the unauthorized user 1 who is attempting to use the information processing apparatus 2 without authorization. A step S25 makes a system lock with respect to the information processing apparatus 2, and a step S26 displays a warning with respect to the unauthorized user 1. As a result, the unauthorized user 1 can no longer use the information processing apparatus 2, and the warning with respect to the unauthorized use of the information processing apparatus 2 is notified by a display with respect to the unauthorized user 1.

FIG. 2 is a diagram for explaining the operating principle of the information processing apparatus control method according to the present invention for a case where the information processing apparatus is used by the unauthorized user other than the legitimate user in a state where a theft registration of the information processing apparatus is not made.

FIG. 2(a) shows a process for a case where the unauthorized user 1 other than the legitimate user 10 uses the information processing apparatus 2. When the unauthorized user 1 makes a password input error with respect to the information processing apparatus 2 in a step S1 a predetermined number of times, for example, a step S2 makes an access to the database DB1 of the registration center 3, and thus, the model information and the like related to the information processing apparatus 2 in which the password input error is generated is registered' within the database DB1. In addition, a step S3 stores a transmission log information related to the transmission to the registration center 3 (in this case, transmission log information related to the transmission to the database DB1) within the information processing apparatus 2. Further, a step S4 makes a system lock with respect to the information processing apparatus 2. As a result, the unauthorized user 1 can no longer use the information processing apparatus 2.

FIG. 2(b) shows a process for a case where the unauthorized user 1 uses the information processing apparatus 2 again in a state where the theft of the information processing apparatus 2 is not registered in the registration center 3. When the unauthorized user 1 attempts to use the information processing apparatus 2 again in a step S31, a step S32 confirms whether or not the transmission log information related to the transmission to the registration center 3 (in this case, transmission log information related to the transmission to the database DB1) is stored within the information processing apparatus 2. If the transmission log information is stored within the information processing apparatus 2, a step S33 makes an access to the database DB2 of the registration center 3, and carries out a data search to determine whether or not the theft of the information processing apparatus 2 is registered within the database DB2 of the registration center 3. If the theft of the information processing apparatus 2 is not registered within the database DB2, a step S34 notifies to the information processing apparatus 2 a message indicating that the theft of the information processing apparatus 2 is not registered. A step S35 makes an access to the database DB1 of the registration center 3, and carries out a data search to determine whether or not the model information and the like related to the information processing apparatus 2 in which the password input error is generated is registered within the database DB1 of the registration center 3. If the model information and the like related to the information processing apparatus 2 in which the password input error is generated is registered within the database DB1, a step S36 notifies to the information processing apparatus 2 a message indicating that the model information and the like related to the information processing apparatus 2 in which the password input error is generated is registered, and a step S37 makes a system lock with respect to the information processing apparatus 2. As a result, the unauthorized user 1 can no longer use the information processing apparatus 2.

A process for a case where the legitimate user 10 makes the password input error with respect to the information processing apparatus 2 a predetermined number of times, for example, is similar to that shown in FIG. 2(b).

Therefore, when the theft registration described above in conjunction with FIG. 1 is made and a password input error is thereafter generated at the information processing apparatus, it is possible to judge whether the password input error is caused by a password input error made by the legitimate user or caused by an unauthorized access made by the unauthorized user, thereby making possible to properly use the security. In addition, even when the theft registration is not yet made as described above in conjunction with FIG. 2, the system lock is positively made, as long as the transmission log to the registration center is stored within the information processing apparatus or, the model information and the like related to the information processing apparatus 2 in which the password input error is generated is registered within the registration center. For this reason, the security of the information processing apparatus is improved. Furthermore, because the data within the information processing apparatus are not erased, the legitimate user can continue to use the information processing apparatus as before after the stolen information processing apparatus is returned to the legitimate user, by deleting from the registration center the theft registration or the registered model information and the like related to the information processing apparatus in which the password input error is generated, so as to cancel the security imposed with respect to the information processing apparatus.

The information processing apparatus 2 shown in FIGS. 1 and 2 is a portable apparatus such as a lap-top personal computer, but the apparatus is of course not limited to the portable type. In addition, the registration center 3 may be formed by a general purpose computer or a personal computer, for example. The communication between the information processing apparatus 2 and the registration center 3 may be made by cable or by wireless communication.

Furthermore, because the security uses communication, it is desirable that the information processing apparatus 2 is always in a communicatable state. For this reason, it is desirable that the system is designed not to operate when it is judged that the information processing apparatus 2 cannot make a communication.

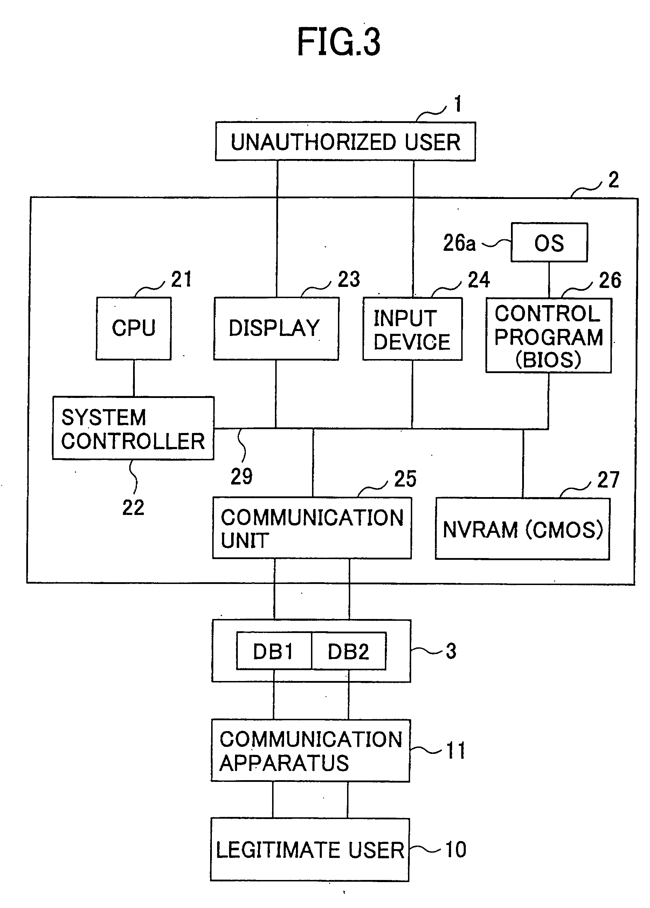

Next, a description will be given of an embodiment of the information processing apparatus control method according to the present invention, by referring to FIGS. 3 through 9. This embodiment of the information processing apparatus control method employs first through third embodiments of an information processing apparatus according to the present invention.

FIG. 3 is a system block diagram showing a structure of a system which may be applied with this embodiment of the information processing apparatus control method.' In FIG. 3, the information processing apparatus 2 is a portable personal computer or the like including a CPU 21, a system controller 22, a display 23, an input device 24 such as a keyboard, a communication unit 25, a storage unit 26 which stores control programs including an operating system (OS) 26a, and a storage unit 27 including a nonvolatile RAM or the like. The system controller 22, the display 23, the input device 24 such as the keyboard, the communication unit 25, and the storage units 26 and 27 are connected via a bus 29. The information processing apparatus 2 forms. the first embodiment of the information processing apparatus.

The CPU 21 controls the entire operation of the information processing apparatus 2. The system controller 22 controls various parts of the information processing apparatus 2 which are connected via the bus 29, under the control of the CPU 21. The display 23 is provided to display various kinds of information, and the input device 24 is provided to input various information including a password and to input instructions to the information processing apparatus 2. The communication unit 25 is provided to communicate with another apparatus which is connected to the system via a wireless line. The communication unit 25 may include in addition to a modem or the like, a wireless communication unit which is internally provided or a wireless communication unit which is externally provided with respect to the communication unit 25.

For example, the storage unit 26 is made of a ROM or the like which stores the control programs such as BIOS.ROM to be executed by the CPU 21, and this storage unit 26 stores data and the like and a program according to the present invention to be executed by the CPU 21. The program according to the present invention is realized as a portion of the control program. The storage unit 27 is made of a nonvolatile RAM (CMOS) or the like which can store data so as not to be erased even when the power supply is turned OFF, and this storage unit 27 stores information such as transmission log information related to a transmission to the registration center 3.

When the present invention is realized as a portion of the BIOS, the present invention carried out by a security process which is often called as a "Power On Password" and urges a password input after the power supply is turned ON. In other words, when the power supply of the information processing apparatus 2 is turned ON, the control program is first read from the BIOS.ROM, and a message urging the password input is displayed on the screen. A process which is carried out thereafter will be described later in the specification. When the input password is correct, the operating system (OS) stored in a hard disk unit which is not shown is read and the system is started.

The communication apparatus 11 is not limited to a particular type, as long as the communication apparatus 11 has a structure which enables communication with the registration center 3 and theft registration. In this embodiment, it is assumed for the sake of convenience that the communication apparatus 11 is formed by a personal computer such as the information processing apparatus 2. The communication apparatus 11 forms the second embodiment of the information processing apparatus.

On the other hand, the registration center 3 is formed by an information processing apparatus such as a general purpose computer and a personal computer. The information processing apparatus forming the registration center 3 may have a structure similar to that of the information processing apparatus 2, for example, and thus, only the databases DB1 and DB2 are shown in FIG. 3 for the sake of convenience. The registration center 3 forms the third embodiment of the information processing apparatus.

In this embodiment, it is assumed that the communication between the communication unit 25 of the information processing apparatus 2 and a communication unit (not shown) of the registration center 3, and the communication between the communication apparatus 11 and the communication unit of the registration center 3 are respectively made via wireless lines by a known method.

Of course, the basic structures themselves of the information processing apparatus 2, the registration center 3 and the communication apparatus 11 are not limited to those described above, and it is possible to employ information processing apparatuses having various known basic structures.

This embodiment was described for a case where the process of the present invention is applied to the control program which is executed before the OS is started. By carrying out the present invention before the start of the OS, it is possible to obtain a high-level security. In addition, instead of realizing the present invention by the control program as in the case of this embodiment, it is also possible to realize the present invention by the OS. For example, in an OS which is known as MS-Windows, it is possible to make a setting which requires a password input when starting the OS. In other words, the following procedure is carried out when the present invention is applied to the OS.

When the power supply of the information processing apparatus is turned ON, the control program is read from the BIOS.ROM, and various settings of the apparatus are made. After the settings, the OS is read from the hard disk unit and started. The started OS displays a screen which urges the password input by an initial process thereof. Measures are taken so that the process of the present invention is carried out when it is detected that the user has made an erroneous password input a plurality of times with respect to the screen display. The present invention is not limited to the application when the power supply is turned ON, the OS is started or the like, but is also applicable to any time the password input is urged.

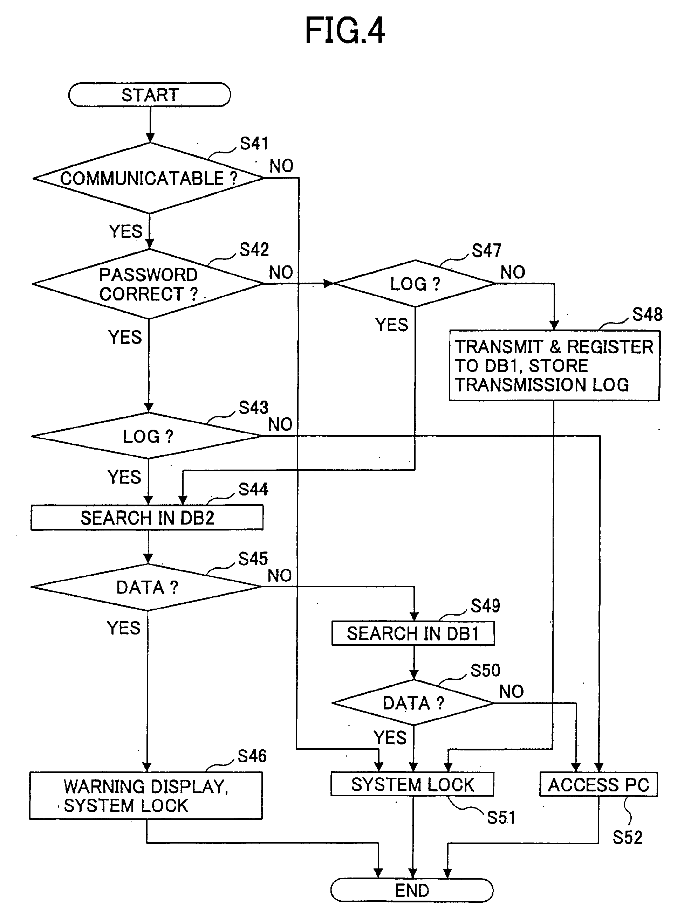

FIG. 4 is a flow chart for explaining the operation of the first embodiment of the information processing apparatus according to the present invention. More particularly, FIG. 4 is a flow chart for explaining the operation of the CPU 21 of the information processing apparatus 2 by the program according to the present invention.

In FIG. 4, a step S41 decides whether or not the information processing apparatus 2 is in a communicatable state. A step S42 decides whether or not a correct password is input from the input device 24 if the decision result in the step S41 is YES. If the decision result in the step S42 is YES, a step S43 decides whether or not the transmission log information related to the transmission to the registration center 3 is stored in the storage unit 27. If the decision result in the step S43 is YES, a step S44 makes an access to the database DB2 of the registration center 3 and searches within the database DB2. A step S45 decides whether or not the theft registration related to the information processing apparatus 2 is registered within the database DB2, that is, whether or not the model information and the like related to the information processing apparatus 2 in which the erroneous password input is generated is registered in the database DB2. If the decision result in the step S45 is YES, a step S46 displays a warning on the display 23, makes a system lock, and the process ends. Instead of displaying the warning, it is of course possible to make the warning by warning sound or the like.

On the other hand, if the password input error is made a predetermined number of times, for example, and the decision result in the step S42 is NO, a step S47 decides whether or not the transmission log information related to the transmission to the registration center 3 is stored in the storage unit 27. The process advances to the step S44 if the decision result in the step S47 is YES. In addition, if the decision result in the step S47 is NO, a step S48 makes an access to the database DB1 of the registration center 3, and the registration center registers the model information and the like related to the information processing apparatus 2 in which the password input error is generated into the database DB1, while at the information processing apparatus 2 the transmission log information related to the transmission to the registration center 3 (in this case, the transmission log information related to the transmission to the database DB1) is stored within the storage unit 27, for example. After the step S48, a step S51 makes a system lock and the process ends.

If the decision result in the step S43 is NO, a step S52 enables access to the information processing apparatus 2, and the process ends. In this case, the information processing apparatus 2 can be used in a normal manner.

In addition, if the decision result in the step S45 is NO, a step S49 makes an access to the database DB1 of the registration center 3 and searches within the database DB1. A step S50 decides whether or not the model information and the like related to the information processing apparatus 2 in which the password input error is generated is registered in the database DB1. If the decision result in the step S50 is YES, the step S51 makes a system lock, and the process ends.

On the other hand, if the decision result in the step S50 is NO, the step S52 enables access to the information processing apparatus 2, and the process ends.

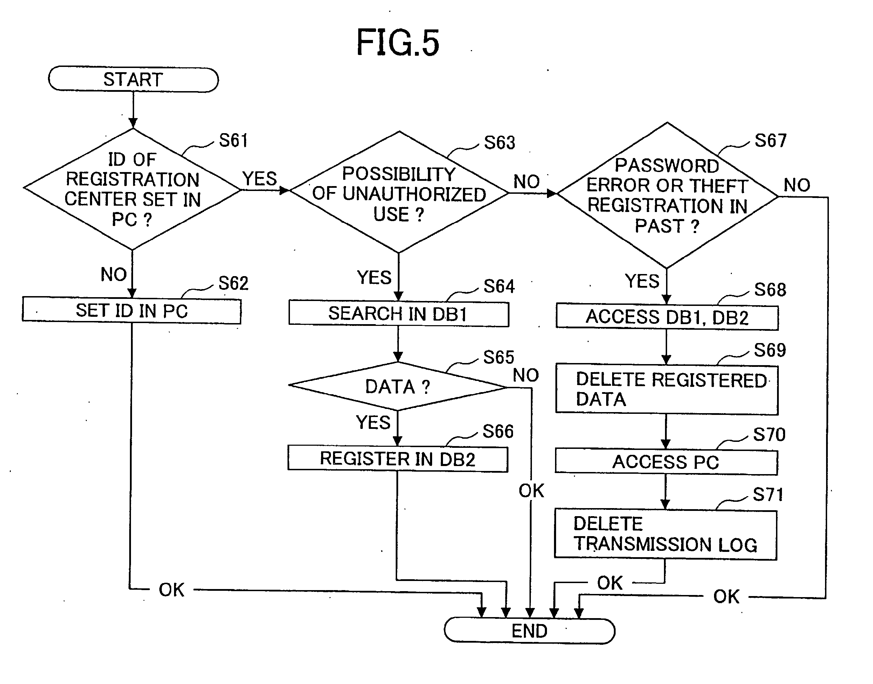

FIG. 5 is a flow chart for explaining the operation of the second embodiment of the information processing apparatus according to.the present invention. More particularly, FIG. 5 is a flow chart for explaining the operation of the CPU of the communication apparatus 11 by the program according to the present invention.

In FIG. 5, a step S61 decides whether or not an ID of the registration center 3 is set in the information processing apparatus 2. If the decision result in the step S61 is NO, a step S62 sets the ID of the registration center 3 in the information processing apparatus 2, and the process ends.

If the decision result in the step S61 is YES, a step S63 decides whether or not there is presently a possibility of an unauthorized use of the information processing apparatus 2 by the unauthorized user 1. If the decision result in the step S63 is YES, a step S64 makes an access to the database DB1 of the registration center 3 and searches within the database DB1. A step S65 decides whether or not the model information and the like related to the information processing apparatus 2 in which the password input error is generated is registered in the database DB1. If the decision result in the step S65 is YES, a step S66 registers the in the database DB2 the model information and the like related to the information processing apparatus 2 in which the password input error is generated and is registered in the database DB1, and the process ends. Hence, the theft registration of the information processing apparatus 2 is made with respect to the registration center 3 by the legitimate user 10. The process ends if the decision result in the step S65 is NO.

On the other hand, if the decision result in the step S63 is NO, a step S67 decides whether or not the password input error or the theft has been registered in the past. The process ends if the decision result in the step S67 is NO. If the decision result in the step S67 is YES, a step S68 makes accesses to the databases DB1 and DB2 of the registration center 3. In addition, a step S69 deletes the registered data related to the theft of the information processing apparatus 2 from the databases DB1 and DB2, so as to delete the theft registration. Thereafter, a step S70 makes an access to the information processing apparatus 2, a step S71 deletes the transmission log information related to the transmission to the registration center 3 and stored within the information processing apparatus 2, and the process ends.

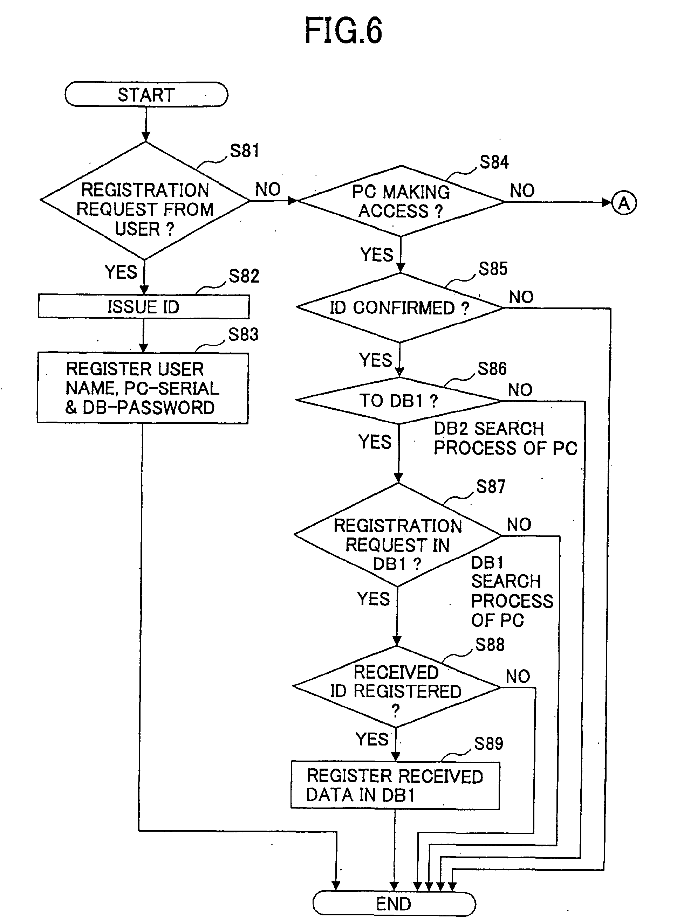

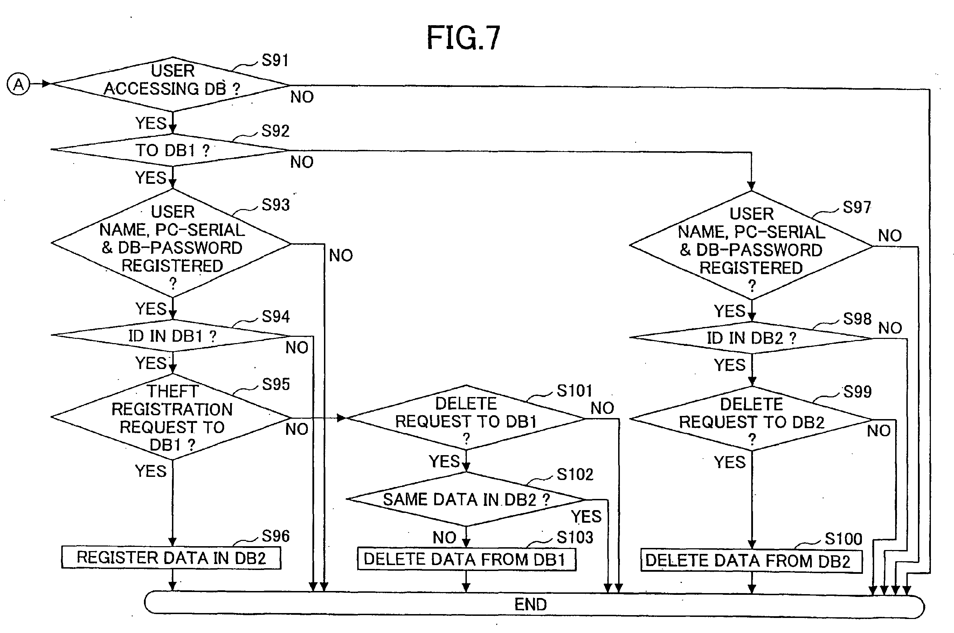

FIGS. 6 and 7 are flow charts for explaining the operation of the third embodiment of the information processing apparatus according to the present invention. More particularly, FIGS. 6 and 7 are flow charts for explaining the operation of the CPU of the registration center 3 by the program according to the present invention.

In FIG. 6, a step S81 decides whether or not a registration request is received from the legitimate.user 10. If the decision result in the step S81 is YES, a step S82 issues an ID of the registration center 3. In addition, a step S83 registers a user name of the legitimate user 10, a model information such as a serial number (PC-Serial) of the information processing apparatus 2, information such as a password (DB-Password) of the database, and the process ends.

If the decision result in the step S81 is NO, a step S84 decides whether or not the registration center 3 is being accessed from the information processing apparatus 2. If the decision result in the step S84 is YES, a step S85 decides whether or not the ID from the information processing apparatus 2 is the ID of the registration center 3. If the decision result in the step S84 is NO, the process advances to a step S91 shown in FIG. 7 which will be described later. The process ends if the decision result in the step S85 is NO.

If the decision result in the step S85 is YES, a step S86 decides whether or not the access is to the database DB1. If the decision result in the step S86 is NO, the information processing apparatus 2 makes the data search with respect to the database DB2 as described above, and thus, the process ends. On the other hand, if the decision result in the step S86 is YES, a step S87 decides whether or not there is stored within the database DB1 a registration request to register the model information and the like related to the information processing apparatus 2 in which the password input error is generated. If the decision result in the step S87 is NO, the process ends since the information processing apparatus 2 will make the data search with respect to the database DB1 as described above.

If the decision result in the step S87 is YES, a step S88 decides whether or not the ID received from the information processing apparatus 2 is registered in the registration center 3. The process ends if the decision result in the step S88 is NO. If the decision result in the step S88 is YES, the model information and the like related to the information processing apparatus 2 in which the password input error is generated is registered in the database BD1, and the process ends.

In FIG. 7, the step S91 decides whether or not the legitimate user 10 is making an access to the database DB1 or DB2, and the process ends if the decision result in the step S91 is NO. If the decision result in the step S91 is YES, a step S92 decides whether or not the access is made to the database DB1. If the decision result in the step S92 is YES, a step S93 decides whether or not a user name of the legitimate user 10, a model information such as a serial number (PC-Serial) of the information processing apparatus 2, information such as a password (DB-Password) of the database are registered, and the process ends if the decision result in the step S93 is NO.

If the decision result in the step S93 is YES, a step S94 decides whether or not the ID from the information processing apparatus 2 is registered in the database DB1, and the process ends if the decision result in the step S94 is NO. If the decision result in the step S94 is YES, a step S95 decides whether or not there is a registration request to register theft of the information processing apparatus 2 with respect to the database DB1. If the decision result in the step S95 is YES, a step S96 registers the theft data such as the ID, the date of theft registration and the time into the database DB2, and the process ends after making the theft registration.

If the decision result in the step S92 is NO, a step S97 decides whether or not a user name of the legitimate user 10, a model information such as a serial number (PC-Serial) of the information processing apparatus 2, information such as a password (DB-Password) of the database are registered, and the process ends if the decision result in the step S97 is NO. If the decision result in the step S97 is YES, a step S98 decides whether or not the ID from the information processing apparatus 2 is registered in the database DB2, and the process ends if the decision result in the step S98 is NO. If the decision result in the step S98 is YES, a step S99 decides whether or not there is a delete request with respect to the database DB2 to delete the theft registration related to the information processing apparatus 2. If the decision result in the step S99 is YES, a step S100 deletes the theft data from the database DB2, and the process ends after the theft registration is deleted. The process ends if the decision result in the step S99 is NO.

Moreover, if the decision result in the step S95 is NO, a step S101 decides whether or not there is a delete request with respect to the database DB1 to delete the theft registration related to the information processing apparatus 2. If the decision result in the step S101 is YES, a step S102 decides whether or not the data identical to that in the database DB1 exist in the database DB2. If the decision result in the step S102 is NO, a step S103 deletes the theft data from the database DB1, and the process ends after deleting the theft registration. If the decision result in the step S101 is NO or, if the decision result in the step S102 is YES, the process ends.

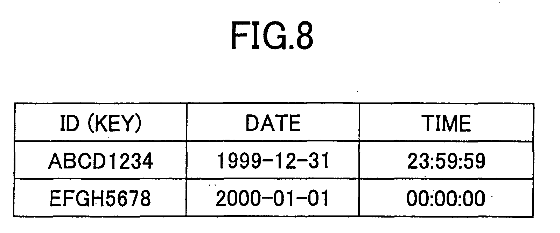

FIG. 8 is a diagram showing a data structure of management used in the embodiments described above. The management data shown in FIG. 8 are the theft data such as the ID, the date of theft registration and the time which are registered in the database DB2 by the step S96 shown in FIG. 7, for example.

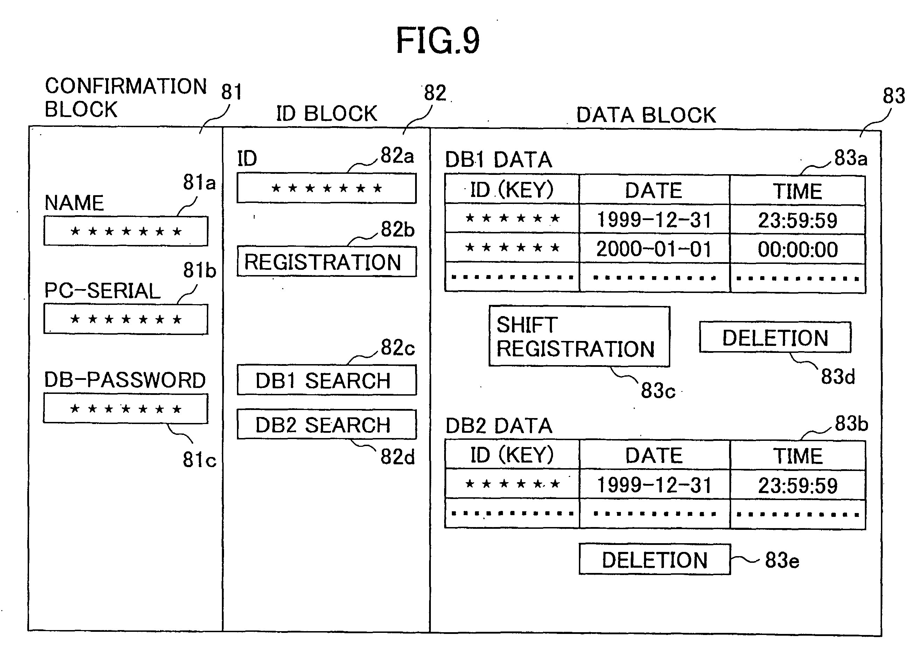

FIG. 9 is a diagram for explaining an input screen. A confirmation block 81, an ID block 82, and a data block 83 are displayed as shown in FIG. 9 on the screen of the display of the communication apparatus 11.

A field 81a for inputting the user name of the legitimate user 10, a field 81b for inputting the model information such as the serial number (PC-Serial) of the information processing apparatus 2, and a field 81c for inputting the password (DB-Password) of the database are displayed within the confirmation block 81, and the information can be input to these fields 81a, 81b and 81c from the input device of the communication apparatus 11.

A field 82a for inputting the ID, and buttons 82b, 82c and 82d respectively for instructing "registration", "DB1 search" and DB2 search" are displayed within the ID block 82, and the information can be input to the field 82a from the input device of the communication apparatus 11. The "registration", "DB1 search" and DB2 search" requests to the registration center 3 an be made by clicking the corresponding buttons 82b, 82c and 82d by a pointing device such as a mouse of the communication apparatus 11.

A field 83a for registering and deleting the theft data such as the date of the theft registration and the time with respect to the database DB1, a field 83b for registering and deleting the theft data such as the date of the theft registration and the time with respect to the database DB2, a button 83c for instructing "theft registration", a button 83d for instructing "deletion" of the theft data displayed within the field 83a, and a button 83e for instructing "deletion" of the theft data displayed within the field 83b are displayed within the data block 83.

Next, a description will be given of first through third embodiments of a computer-readable storage medium according to the present invention.

For example, the first through third embodiments of the storage medium are formed by a storage medium used by the storage unit 26 or 27 shown in FIG. 3, a storage unit within an information processing apparatus other than the information processing apparatus 2 shown in FIG. 3 or, a recording medium which stores a program in a manner such that the program can be downloaded to the storage unit 26 or 27 of the information processing apparatus 2. The recording medium which forms the storage medium is not limited to a specific recording medium or specific storage unit, and may be formed by disk-shaped recording media such as a magnetic disk an optical disk, a magnetooptical disk, a floppy disk and a CD-ROM, card-shaped recording media such as an IC card, and semiconductor memory devices such as a ROM. Further, a portable recording medium may form the storage medium.

The first embodiment of the storage medium stores a program for causing a computer (CPU or the like) such as the information processing apparatus 2 to carry out the process shown in FIG. 4.

The second embodiment of the storage medium stores a program for causing a computer (CPU or the like) such as the communication apparatus 11 to carry out the process shown in FIG. 5.

The third embodiment of the storage medium stores a program for causing a computer (CPU or the like) such as the registration center 3 to carry out the process shown in FIGS. 6 and 7.

Further, the present invention is not limited to these embodiments, but various variations and modifications may be made without departing from the scope of the present invention.

## Claims

1. An information processing apparatus comprising:
a storage unit; and
a processing part which registers information of the information processing apparatus by transmitting to a first database of a registration center when a password input error is detected, and stores transmission log information related to a transmission to the registration center into said storage unit.

2. The information processing apparatus as claimed in claim 1, wherein said processing part includes means for transmitting to a second database of the registration center if the transmission log information is stored in said storage unit, and for making a system lock with respect to the information processing apparatus if the information related to the information processing apparatus is registered in the first database or the second database.

3. The information processing apparatus as claimed in claim 2, wherein said processing part includes means for outputting a warning if the information related to the information processing apparatus is registered in the second database.

4. An information processing apparatus comprising:
a processing part which searches a first database of a registration center and registers information related to a predetermined apparatus into a second database of the registration center if the information related to the predetermined apparatus is registered in the first database.

5. The information processing apparatus as claimed in claim 4, wherein said processing part includes means for deleting the information related to the predetermined apparatus registered in the first database and/or the second database.

6. An information processing apparatus comprising:
a first database which registers information related to a first apparatus when notified of a password input error at the first apparatus, in response to a transmission from the first apparatus;
a second database which registers the information of the first apparatus when the information related to the first apparatus is notified from a second apparatus and the information related to the first apparatus is registered in said first database, in response to a transmission from the second apparatus; and
a processing part which controls registration of information to and deletion of information from said first database and said second database.

7. The information processing apparatus as claimed in claim 6, wherein said processing part includes means for deleting the information related to the first apparatus from said first database and/or said second database when a request to delete the information related to the first apparatus is received with respect to said first database and/or said second database, in response to the transmission from the second apparatus.

8. An information processing apparatus control method comprising:
a step which registers information of an information processing apparatus by transmitting to a first database of a registration center when a password input error is detected at the information processing apparatus, and stores transmission log information related to a transmission to the registration center within the information processing apparatus.

9. The information processing apparatus control method as claimed in claim 8, further comprising:
a step which transmits to a second database of the registration center if the transmission log information is stored in the information processing apparatus, and makes a system lock with respect to the information processing apparatus if the information related to the information processing apparatus is registered in the first database or the second database.

10. The information processing apparatus control method as claimed in claim 9, further comprising:
a step which outputs a warning if the information related to the information processing apparatus is registered in the second database.

11. An information processing apparatus control method comprising:
a step which searches a first database of a registration center and registers information related to a predetermined apparatus into a second database of the registration center if the information related to the predetermined apparatus is registered in the first database.

12. The information processing apparatus control method as claimed in claim 11, further comprising:
a step which deletes the information related to the predetermined apparatus registered in the first database and/or the second database.

13. An information processing apparatus control method comprising:
a step which registers information related to a first apparatus in a first database when notified of a password input error at the first apparatus, in response to a transmission from the first apparatus;
a step which registers the information of the first apparatus in a second database when the information related to the first apparatus is notified from a second apparatus and the information related to the first apparatus is registered in said first database, in response to a transmission from the second apparatus; and
a step which controls registration of information to and deletion of information from said first database and said second database.

14. The information processing apparatus control method as claimed in claim 13, further comprising:
a step which deletes the information related to the first apparatus from said first database and/or said second database when a request to delete the information related to the first apparatus is received with respect to said first database and/or said second database, in response to the transmission from the second apparatus.

15. The information processing apparatus control method as claimed in any one of claims 8 to 14, which is applied to a control program or an operating system of the information processing apparatus.

16. A computer-readable storage medium which stores a program for causing a computer to control access to a registration center, comprising:
means for causing the computer to register information of the computer by transmitting to a first database of the registration center when a password input error is detected, and for causing the computer to store transmission log information related to a transmission to the registration center.

17. The computer-readable storage medium as claimed in claim 16, further comprising:
means for causing the computer to transmit to a second database of the registration center if the transmission log information is stored in said storage unit, and for causing the computer to make a system lock with respect to the computer if the information related to the computer is registered in the first database or the second database.

18. The computer-readable storage medium as claimed in claim 17, further comprising:
means for causing the computer to output a warning if the information related to the computer is registered in the second database.

19. A computer-readable storage medium which stores a program for causing a computer to control access to a registration center, comprising:
means for causing the computer to search a first database of a registration center and register information related to a predetermined apparatus into a second database of the registration center if the information related to the predetermined apparatus is registered in the first database.

20. The computer-readable storage medium as claimed in claim 19, further comprising:
means for causing the computer to delete the information related to the predetermined apparatus registered in the first database and/or the second database.

21. A computer-readable storage medium which stores a program for causing a computer to control access to a registration center, comprising:
means for causing the computer to register information related to a first apparatus in a first database when notified of a password input error at the first apparatus, in response to a transmission from the first apparatus;
means for causing the computer to register the information of the first apparatus in a second database when the information related to the first apparatus is notified-from a second apparatus and the information related to the first apparatus is registered in said first database, in response to a transmission from the second apparatus; and
means for causing the computer to control registration of information to and deletion of information from said first database and said second database.

22. The computer-readable storage medium as claimed in claim 21, further comprising:
means for causing the computer to delete the information related to the first apparatus from said first database and/or said second database when a request to delete the information related to the first apparatus is received with respect to said first database and/or said second database, in response to the transmission from the second apparatus.

23. The computer-readable storage medium as claimed in any of one of claims 16 to 22, wherein said program forms a portion of a control program or an operating system of the information processing apparatus.
